# EUROPÄISCHE PATENTSCHRIFT

(11) **EP 2 286 049 B1**
(45) Veröffentlichungstag und Bekanntmachung des Hinweises auf die Patenterteilung: **01.07.2015**
(21) Anmeldenummer: 09741863.6
(22) Anmeldetag: 05.05.2009
(51) Int. Cl.: G05B 19/042, E05F 15/41

(54) **FREISCHALTUNG VON FUNKTIONEN IN EINEM TÜRANTRIEB**
ENABLING OF FUNCTIONS IN A DOOR DRIVE
DÉCONNEXION DES FONCTIONS D'UN MÉCANISME D'ENTRAÎNEMENT DE PORTE

(30) Priorität: 07.05.2008 DE 102008022714
(43) Veröffentlichungstag der Anmeldung: 23.02.2011
(73) Patentinhaber: DORMA Deutschland GmbH, 58256 Ennepetal (DE)
(72) Erfinder: RÖMER, Martin, 58339 Breckerfeld (DE)
(74) Vertreter: Balder IP Law, S.L.
(86) Internationale Anmeldenummer: PCT/EP2009/003209
(87) Internationale Veröffentlichungsnummer: WO 2009/135644

(56) Entgegenhaltungen:
- EP-A- 0 643 189
- EP-B- 0 756 663
- DE-A1-102004 052 438
- DE-A1-102006 029 766
- US-A1- 2003 112 123

## Beschreibung

Die Erfindung betrifft ein Verfahren zum Betrieb eines Türantriebs. Weiterhin betrifft die Erfindung einen Türantrieb.

Ein mechanischer Türantrieb ist in der EP 0 756 663 B1 beschrieben. In einem zylinderförmigen Gehäuse des Türantriebs ist ein Laschenwagen gelagert, der bereichsweise eine Feder durchsetzt. Diese Feder stützt sich einerseits an einem Vorsprung im Gehäuse und andererseits an einem Kragen des Laschenwagens ab. Des Weiteren verfügt der Türantrieb über eine Antriebsachse, mit der der zu bewegende Türflügel verbunden ist. Innerhalb des Gehäuses weist die Antriebsachse eine exzenterförmige Hubkurvenscheibe auf. Diese Hubkurvenscheibe ist zwischen zwei, am Laschenwagen angeordnete und als Stützmittel bzw. als Druckelement wirkende, Rollen positioniert. Eine Bewegung der Antriebsachse resultiert aufgrund der Exzentrizität der Hubkurvenscheibe in einer longitudinalen Bewegung des Laschenwagens.

Neben den beschriebenen mechanischen Türantrieben finden weiterhin elektromechanische Türantrieb Verwendung. Die genannten Antriebe weisen ein elektromechanisches System auf, welches zum Öffnen und/oder Schließen einer Tür benutzt werden kann. Zur Steuerung der elektrischen Komponenten der Türantrieb finden integrierte Schaltkreise Verwendung. So ist es beispielsweise möglich, eine entsprechende Programmierung in den integrierten Schaltkreisen zu hinterlegen.

Aus dem Stand der Technik ist bekannt, dass Türantriebe eine Vielzahl von Funktionen ausführen können. Je nach Anwendung hat es sich etwa als vorteilhaft erwiesen, wenn eine der folgenden Funktionen an der Tür ausgelöst werden kann:
- Not-Halt-Funktion,
- "Automatik öffnen" oder
- "Push-and-Go" Funktion.

Durch die Erweiterung eines Türantriebs um die genannten Funktionen, ist es möglich, diesen Türantrieb auch dort einzusetzen, wo besondere Anforderungen vorliegen, wie etwa in einem Krankenhaus. So ist es einer Krankenschwester durch eine Berührung der Tür möglich, die "Push-and-Go" Funktion zu aktivieren, welche zu einer selbstständigen Öffnung der Tür führt. Allerdings hat es sich nicht als notwendig erwiesen, jeden Türantrieb immer mit der gesamten Bandbreite an möglichen Funktionen auszustatten. Vielmehr werden auf ein Grundmodul eines bekannten Türantriebs Funktionsmodule aufgesteckt, welche jeweils die gewünschte Funktion ermöglichen. Als nachteilig hat es sich dabei herausgestellt, dass bei einer Nutzung einer Mehrzahl von aufgesteckten Funktionsmodulen die Türantriebe störanfällig und kostenintensiv werden. Zudem ergeben sich aufgrund der begrenzten Anzahl an aufsteckbaren Funktionsmodulen Einschränkungen in der Anzahl möglicher, mittels des Türantriebs realisierbarer Funktionen. Außerdem ist für die Vielzahl an Funktionsmodulen ein relativ großer Bauraum vorzusehen, der ansonsten ungenutzt bleibt.

US 2003/112123 offenbart ein anderes Beispiel eines Türantriebs.

Ausgehend von dem zuvor aufgeführten Stand der Technik, ist es Aufgabe der vorliegenden Erfindung, ein Verfahren zum Betrieb eines Türantriebs zu schaffen, welches die vorgenannten Nachteile überwindet, insbesondere einen zuverlässigen und preiswerten Betrieb eines Türantriebs ermöglicht.

Diese Aufgabe wird durch ein Verfahren zum Betrieb eines Türantriebs gemäß Anspruch 1 sowie einen Türantrieb gemäß Anspruch 16 gelöst. Vorteilhafte Ausgestaltungen der Erfindung sind in den abhängigen Ansprüchen angegeben. Merkmale und Details die dabei im Zusammenhang mit dem erfindungsgemäßen Verfahren beschrieben werden, gelten dabei selbstverständlich auch für den erfindungsgemäßen Türantrieb.

Im Rahmen der Erfindung wird ein Verfahren zum Betrieb eines Türantriebs offenbart, das zumindest einen Aktivierungsfall aufweist. Der Aktivierungsfall umfasst einen Schritt des Einsteckens eines ersten Funktionsmoduls in einen Steckplatz des Türantriebs. Das erste Funktionsmodul beinhaltet erste Information über zumindest eine freizuschaltende Funktion. Daraufhin wird diese erste Information an den Türantrieb übermittelt. Im Türantrieb wird Basis der übermittelten ersten Information ermittelt, welche zusätzliche/n Funktion/en freizuschalten ist/sind. Zudem wird im Türantrieb eine eindeutige erste (Registrierungs-)Kennung erzeugt. Diese erzeugte erste Kennung wird an das erste Funktionsmodul zurück übermittelt und daraufhin im ersten Funktionsmodul gespeichert. Daraufhin oder zeitgleich wird/werden die ermittelte/n freizuschaltende/n Funktion/en im Türantrieb aktiviert bzw. freigeschaltet.

Nach Abschluss des Aktivierungsfalls steht dem Türantrieb somit zumindest eine erste zusätzliche Funktion zur Verfügung.

In einem Erweiterungsfall, d. h. beim Aktivieren zusätzlicher, zu der/n ersten Funktion/en unterschiedlicher Funktion/en, also anderer Funktion/en als der ersten Funktion/en, wird im Rahmen des erfindungsgemäßen Verfahrens zunächst das erste Funktionsmodul vom Steckplatz entfernt, und ein zweites Funktionsmodul wird in den Steckplatz eingesteckt. Das zweite Funktionsmodul weist Information über (eine) mittels ihm frei zu schaltende zweite Funktion/en auf. Wiederum wird nunmehr diese zweite Information an den Türantrieb übermittelt. Vorzugsweise im Grundmodul wird/werden aufgrund dieser übermittelten zweiten Information wird/wer den wiederum die zusätzlich freizuschaltende/n Funktion/en ermittelt. Daraufhin wird im Türantrieb eine zweite Kennung erzeugt, diese zum zweiten Funktionsmodul übermittelt und im zweiten Funktionsmodul gespeichert. Das zweite Funktionsmodul wird daraufhin vom Steckplatz entfernt, und das erste Funktionsmodul wird wieder eingesetzt. Vorzugsweise die übermittelte zweite Information wird im ersten Funktionsmodul und vorzugsweise im Türantrieb bzw. im Grundmodul gespeichert. Dann erfolgt im Türantrieb das Freischalten der ermittelten zweiten Funktion/en.

Soll der Türantrieb zumindest eine weitere Funktion ausführen können, wird diese zweite Funktion im Rahmen des Erweiterungsfalls folglich mittels eines zweiten Funktionsmoduls freigeschaltet. Das erste Funktionsmodul wird nur vorübergehend ausgetauscht und durch das zweite Funktionsmodul ersetzt. Nach der Aktivierung der zweiten Funktion ist es nicht mehr nötig, das zweite Funktionsmodul in dem Steckplatz stecken zu lassen. Vielmehr bedarf es wieder einer erneuten Integration, d. h. eines Einsteckens, des ersten Funktionsmoduls in den Steckplatz, damit dieses Information hinsichtlich der weiteren Funktion speichern kann. Im Rahmen des erfindungsgemäßen Verfahrens speichert folglich das erste Funktionsmodul Informationen über sämtliche im Türantrieb freigeschaltete bzw. aktivierte Funktionen, die an dem Türantrieb auslösbar bzw. nutzbar sind. Das erste Funktionsmodul bildet somit eine Art Containermodul.

Eine weitere Funktion des Ablegens der Kennungen im jeweiligen zweiten Funktionsmodul ist vorzugsweise die Entwertung des jeweiligen zweiten Funktionsmoduls. D. h. dieses zweite Funktionsmodul kann nicht mehr zur Freischaltung (derselben) Funktion/en in einem Türantrieb genutzt werden. Dazu weist das erfindungsgemäße Verfahren unmittelbar nach Einsetzen eines jeweiligen Funktionsmoduls in einen Türantrieb-Steckplatz den Schritt eines Prüfens auf, ob im jeweiligen Funktionsmodul bereits eine Kennung hinterlegt ist. Wird eine hinterlegte Kennung erkannt, wird eine Freischaltung der jeweiligen Funktion/en im jeweiligen Grundmodul verhindert. Dies kann beispielsweise optisch oder akustisch am oder im Türantrieb angezeigt werden.

Der Kern des erfindungsgemäßen Verfahrens besteht somit in der Nutzung eines einzigen Steckplatzes, in welchem immer nur ein Funktionsmodul eingesteckt sein kann.

Durch dieses Verfahren ist eine eindeutige Zuordnung der freigeschalteten Funktion/en zu dem Grundelement, d. h. dem ersten Funktionsmodul, möglich. Durch die Hinterlegung aller Kennungen auf bzw. in dem ersten Funktionsmodul bedarf es keiner Mehrzahl von Steckplätzen mehr, in die die unterschiedlichen Funktionsmodule eingesetzt werden müssen. Damit ist ein Türantrieb, der nach dem erfindungsgemäßen Verfahren betrieben wird, weniger anfällig für Störungen und preiswerter herzustellen. Zudem gibt es enorme Platzvorteile. Auch gibt es nicht mehr das Problem, dass es nur eine begrenzte Anzahl an Erweiterungssteckplätzen bzw. Funktionsmodulen gibt; der Türantrieb kann praktisch mit einer unbegrenzten Anzahl zusätzlicher Funktionen ausgestattet werden.

Im Rahmen der Erfindung umfasst der Begriff Türantrieb sämtliche Einheiten, die zu einem automatischen Betrieb einer beliebig ausgebildeten Tür genutzt werden können. Der Türantrieb dient folglich zur rotatorischen und/oder translatorischen Bewegung der Tür um eine Achse bzw. oder entlang eines Verfahrwegs. Es ist die Aufgabe des Türantriebs, ein Öffnen und/oder ein Schließen der Tür für einen Benutzer zu unterstützen oder die Bewegung der Tür zu verlangsamen oder erst zu ermöglichen. Folglich sind von dem Begriff Türantrieb insbesondere Drehflügeltürantriebe, Türschließer, Schiebetürantriebe, Karusselltürantriebe und/oder Trennwandantriebe umfasst.

Vorzugsweise wird im Aktivierungsfall der Steckplatz zum ersten Mal mit einem Funktionsmodul belegt. Folglich kann an jedem Grundmodul der Aktivierungsfall nur einmal ausgelöst werden. Durch das Einführen bzw. Einsetzen eines ersten Funktionsmoduls in den Steckplatz wird jenes erste Funktionsmodul von dem Grundmodul dahingehend ausgewählt, dass es für die Zukunft Kennungen bzgl. anderer, künftig zu aktivierender Funktionen speichert. Dabei ist es unbedeutend, welche Funktion/en durch das erste Funktionsmodul an dem Grundmodul selbst ausgelöst wird/werden.

Alle Funktionsmodule weisen erfindungsgemäß einen prinzipiell gleichen Basisaufbau auf, der es ihnen ermöglicht, im Rahmen des Erweiterungsfalls Information über weitere, also andere Funktionen zu speichern. Folglich wählt ein Benutzer des erfindungsgemäßen Verfahrens einen Türantrieb und ein beliebiges Funktionsmodul aus. Mittels Einsteckens dieses beliebigen Funktionsmoduls in den Steckplatz wird das Funktionsmodul zu einem Basis-Funktionsmodul oder auch Containermodul für Kennungsinformation. Damit sind Grundmodul und Basis-Funktionsmodul durch im Weiteren noch zu beschreibende Formalismen miteinander funktional gekoppelt bzw. verbunden.

Erfindungsgemäß ist jeder Funktion ein eindeutiger Funktionscode zugeordnet. Somit sind einer ersten Funktion ein erster Funktionscode und einer zweiten Funktion ein zweiter Funktionscode zugeordnet. Diese Funktionscodes sind vorteilhafterweise im jeweiligen Funktionsmodul hinterlegt. Ausgangspunkt ist, dass im Grundmodul des Türantriebes bereits alle möglichen Funktionen des Türantriebs implementiert sind. Zur Aktivierung ist auf dem jeweiligen Funktionsmodul nur der Funktionscode der zu aktivierenden Funktion hinterlegt. Es bedarf keiner weiteren Informationen über die zum Teil sehr umfangreichen und damit speicherintensiven Funktionen, was nur sehr kleine Speicher in den Funktionsmodulen erforderlich macht. Auch ist es dadurch möglich, standardisierte Grundmodule und Funktionsmodule herzustellen, was die Herstellungskosten senken hilft. Ein weiterer Vorteil ergibt sich, wenn neue Funktionen hinzukommen oder Fehler in bereits vertriebenen Funktionen eine Aktualisierung bzw. ein Update erforderlich machen. Nicht etwa in den Funktionsmodulen sondern in den Grundmodulen der Türantriebe ist die Soft- bzw. Firmware zu aktualisieren. Dies ist insbesondere vorteilhaft, da Türantriebe immer zugänglich sind; Funktionsmodule könnten verlegt werden oder momentan nicht auffindbar sein, was eine Aktualisierung unmöglich machen würde. Außerdem ist der sonst notwendige Schritt überflüssig, die auf den Funktionsmodulen aufgespielte, aktualisierte Firmware auch im jeweiligen Türantrieb zu aktualisieren, indem die betroffenen Funktionsmodule in den Türantrieb eingesetzt und eine spezielle Aktualisierungsroutine ausgeführt wird.

Das Grundmodul erkennt im Aktivierungsfall aufgrund des/r Funktionscodes im ersten Funktionsmodul die zu aktivierende/n erste/n Funktion/en. Ein Benutzer kann im Anschluss an diesen somit Aktivierungsfall diese erste Funktion an einer Tür auslösen bzw. nutzen. Dabei ist die Freischaltung der ersten Funktion/en vorzugsweise mittels Speichems des/r Funktionscodes des ersten Funktionsmoduls im Grundmodul realisiert. Zwar ist die Funktion selber schon in dem Grundmodul hinterlegt, aber durch die Speicherung des Funktionscodes in dem Grundmodul ist sichergestellt, dass eine eindeutige Zuordnung der Funktionen des Grundmoduls und des ersten Funktionsmoduls im Rahmen des Erweitungsfalls gewährleistet ist. D. h. das erste (Basis-)Funktionsmodul bzw. -modul ist ab Aktivierung nur noch mit diesem einen Türantrieb verwendbar, was einen Missbrauch beispielsweise mittels Diebstahls und Einsetzens in einen anderen Türantrieb verhindert.

Im Aktivierungsfall erfolgt nach Einsetzen des Funktionsmoduls vorzugsweise zwischen dem Grundmodul und dem ersten Funktionsmodul eine Basiskommunikation. Im Rahmen dieser Basiskommunikation werden zwischen dem ersten Funktionsmodul und dem Grundmodul Informationen ausgetauscht. Bei der ausgetauschten Information kann es sich um eine Kennung handeln. Die Kennung dient zur eindeutigen Erkennung der vom Türantrieb genutzten Funktionsmodule.

In einer ersten Variante erzeugt das Grundmodul eine Kennung und speichert sie ab. Das Grundmodul überträgt im Aktivierungsfall diese Kennung an das erste Funktionsmodul. Alternativ ist es auch möglich, dass das Grundmodul eine im ersten Funktionsmodul gespeicherte, eindeutige Kennung aus dem ersten Funktionsmodul ausliest. Die Kennung wird bei der Herstellung dem Grundmodul und/oder dem ersten Funktionsmodul zugewiesen. Wird die Kennung dem Grundmodul zuerkannt, ist im Nachhinein jederzeit nachprüfbar für welches Grundmodul das gewählte Funktionsmodul als erstes Funktionsmodul genutzt wurde. Eine spätere Trennung der beiden Einheiten - Grundmodul und erstes Funktionsmodul - führt nicht zum Verlust der eindeutigen Zuordnung. Die alternative Ausführungsvariante ermöglicht die individuelle Kennzeichnung jedes Funktionsmoduls. Dieses hat sich insbesondere bei der Produktion als vorteilhaft erwiesen, da so ein genauer Überblick über die hergestellten und vertriebenen Funktionsmodule sichergestellt ist. Die Kennung ist somit vorzugsweise sowohl im Grundmodul als auch im ersten Funktionsmodul gespeichert.

Im Rahmen des erfindungsgemäßen Verfahrens umfasst der Begriff Kennung zum einen eine eindeutige, insbesondere kodierte Information, mit der eine eindeutige Zuordnung des Funktionsmoduls zum jeweiligen Grundmodul möglich ist. Weiterhin umfasst er auch Informationen, die für die Aktivierung der Funktionen in dem Grundmodul notwendig sind.

Ausgangspunkt für einen Erweiterungsfall ist der Wunsch eines Nutzers eines Türantriebs, bei diesem Türantrieb eine zusätzliche Funktion nutzen zu können. Dazu ist vorgesehen, dass das erste Funktionsmodul aus dem einzigen Steckplatz des Grundmoduls entfernt wird. Ein Entnehmen des ersten Funktionsmoduls, ohne dass ein anderes Funktionsmodul aufgesetzt wird, führt nach Ablauf einer definierten Zeitspanne zu einer Deaktivierung des Grundmoduls bzw. dessen aktivierter Funktionen, sodass in dem Fall nur noch die Grundfunktionen des Türantriebs zur Verfügung stehen. Um dies zu verhindern, wird das zweite Funktionsmodul in den Steckplatz integriert. Durch das Erkennen des zweiten Funktionsmoduls wird zum einen die Deaktivierung des Grundmoduls gestoppt und/oder für eine weitere Zeitspanne aufgehalten. Erfindungsgemäß ist nun vorgesehen, dass das Grundmodul das Einstecken des zweiten Funktionsmoduls erkennt und die in dem zweiten Funktionsmodul hinterlegtein zweite/n Funktion/en registriert und diese im Grundmodul aktiviert. Dieses kann beispielhaft dadurch geschehen, dass ein Computerprogramm, welches auf dem Grundmodul bzw. im Türantrieb abläuft, aus dem zweiten Funktionsmodul den zweiten Funktionscode ausliest und mittels einer entsprechenden Programmroutine die zweite/n Funktion/en im Grundmodul freischaltet. Somit ist nach einer Kommunikation zwischen dem Grundmodul und dem zweiten Funktionsmodul die zweite Funktion des Türantriebs für einen Benutzer nutzbar. Vorzugsweise wird der zweiten Funktionscode bzw. eine im Grundmodul erzeugte zweite Kennung sowohl im Grundmodul als auch im zweiten Funktionsmodul gespeichert.

Nach Aktivierung der zweiten Funktion/en wird das zweite Funktionsmodul wieder aus dem Steckplatz entfernt und das erste Funktionsmodul erneut eingesetzt. Im Anschluss erfolgt die beschriebene Speicherung des zweiten Funktionscodes auch im ersten Funktionsmodul. Folglich sind dann im ersten Funktionsmodul sowohl der erste als auch der zweite Funktionscode gespeichert. Das erste Funktionsmodul dient somit als eine Art Datenspeicher für die in dem Grundmodul aktivierten Funktionen.

Alle Funktionscodes bzw. Kennungen werden vorzugsweise in nichtflüchtigen Speicherelementen des Grundmoduls und der betroffenen Funktionsmodule gespeichert. So ist sichergestellt, dass die Funktionszuordnung auch beispielsweise nach einem Stromausfall an einem betroffenen Türantrieb zur Verfügung steht. So führt auch eine Abtrennung des Türantriebs von einer Stromversorgung nicht zu einem Verlust der Informationen.

Um das Speichern und/oder Verarbeiten unterschiedlicher Funktionscodes und/oder Kennungen zu gewährleisten, sind in dem Grundmodul und/oder den Funktionsmodulen Datenspeicher und/oder integrierte Schaltkreise eingesetzt. Dabei werden als integrierte Schaltkreise im Rahmen der Erfindung sämtliche elektronischen Schaltungen auf Basis von Halbleitersubstraten bezeichnet. Es kann sich bei den integrierten Schaltkreisen beispielsweise um einen der folgenden handeln: FPGA (Field Programmable Gate Array), Mikrocontroller, ASIC (Application Specific Integrated Circuit) oder ein Prozessor.

Vorzugsweise ist im Erweiterungsfall folgender zusätzlicher Schritt vorgesehen:
- Übersenden eines Deaktivierungscodes an das zweite Funktionsmodul, wobei das zweite Funktionsmodul durch den Deaktivierungscode in einen Passivzustand versetzt wird.

Durch diesen Verfahrensschritt ist sichergestellt, dass das zweite Funktionsmodul nur einmal genutzt werden kann. Nach der Überführung des zweiten Funktionsmoduls in den Passivzustand ist eine nochmalige Aktivierung der mittels des zweiten Funktionsmoduls aktivierbaren Funktion/en in einem anderen Grundmodul nicht mehr möglich. Dadurch wird ein Missbrauch des zweiten Funktionsmoduls durch eine unberechtigte Person verhindert. Im Rahmen des erfindungsgemäßen Verfahrens zeichnet sich ein Funktionsmodul im Passivzustand dadurch aus, dass keine Übersendung von Funktionscodes mehr stattfindet. Eine Zurücksetzung des Funktionsmoduls aus dem Passivzustand in einen Aktivzustand kann durch den Hersteller des Funktionsmoduls vorgenommen werden. Als das Verfahren verbessernd hat es sich herausgestellt, wenn der Deaktivierungscode nach dem Speichern des zweiten Funktionscodes von dem Grundmodul an das zweite Funktionsmodul gesandt wird. Dadurch ist sichergestellt, dass erst ein vollständiger Austausch des zweiten Funktionscodes stattgefunden hat, bevor der Deaktivierungscode übersandt wird. So sind Fehlbedienungen bzw. Fehlfunktionen des zweiten Funktionsmoduls weitestgehend ausgeschlossen.

Im Rahmen der Nutzung des erfindungsgemäßen Türantriebs besteht die Wahrscheinlichkeit, dass ein Defekt auftritt. Sollte solch ein Defektfall auftreten, ist dieser dadurch gekennzeichnet, dass bestimmte Funktionen von dem Türantrieb nicht mehr ausgeführt werden. Vorteilhafterweise weist das Grundmodul die Möglichkeit eines Selbsttests auf, sodass ein Defektfall beispielsweise optisch und/oder akustisch angezeigt werden kann. Grundsätzlich bestehen im Defektfall folgende Möglichkeiten:
- das Grundmodul ist defekt und/oder
- das erste Funktionsmodul ist defekt.

Bei einem defekten ersten Funktionsmodul muss dieses durch ein intaktes Funktionsmodul ausgetauscht werden. Allerdings sind die Kennungen hinsichtlich sämtlicher Funktionen, die an dem Türantrieb freigeschaltet wurden, auf dem ersten Funktionsmodul gespeichert. Um dennoch einen weiteren Betrieb des Türantriebs zu ermöglichen, kann über eine Werkeinstellung des Türantriebs eine Löschung aller bisherigen Daten auf dem Grundmodul erfolgen. Im Anschluss daran, muss ein neues erstes Funktionsmodul genutzt werden, auf dem vorteilhafterweise alle Kennungen sämtlicher vorher im Türantrieb freigeschalteter Funktionen abgelegt sind. Die erneute Einspeicherung der Funktionscodes auf dem nunmehr intakten ersten Funktionsmodul, können beispielsweise von einem Monteur mit Hilfe eines Computers durchgeführt werden.

Ist hingegen das Grundmodul mit einem Defekt behaftet, so hat es sich als vorteilhaft erwiesen, dass in einem Austauschfall
- das Grundmodul gegen ein zweites Grundmodul getauscht wird,
- das erste Funktionsmodul in einen Steckplatz des zweiten Grundmoduls eingeführt wird, und
- das zweite Grundmodul die Kennung/n und/oder den/die Funktionscode/s aus dem ersten Funktionsmodul übernimmt und die damit gekennzeichneten Funktion/en freischaltet.

Im Rahmen dieses Austauschfalls werden sämtliche Informationen aus dem ersten Funktionsmodul an das Grundmodul übertragen. Folglich aktiviert das zweite Grundmodul sämtliche Funktionen des ausgetauschten ersten Grundmoduls. Um einen Missbrauch beispielsweise aufgrund eines Diebstahls zu verhindern, kann vorgesehen sein, dass das Grundmodul oben beschriebene Übernahme der Information aus dem ersten Funktionsmodul nur dann übernimmt, wenn eine autorisierte Person diese Übernahmeroutine beispielsweise mittels Eingabe eines speziellen Codes aktiviert. Dieser spezielle Code ist vorzugsweise wiederum eindeutig, sodass er nur an einem einzigen Türantrieb genutzt werden kann.

Alternativ wird über eine Schnittstelle am Türantrieb ein Gerät, wie beispielsweise ein PDA (Personal Digital Assistant) angeschlossen, das die Übernahmeroutine ausführt.

Wie vorstehend beschrieben, werden bei einem Abziehen des ersten Funktionsmoduls vom Türantrieb die Funktionen des Grundmoduls deaktiviert beispielsweise nach Ablauf einer vorbestimmten Zeitspanne deaktiviert. Folglich können die im Grundmodul freigeschalteten zusätzlichen Funktionen nicht mehr genutzt werden. Daraufhin ist auch eine Nutzung des ersten Funktionsmoduls in diesem Türantrieb nicht mehr möglich. Vorzugsweise erfolgt beim Abziehen des ersten Funktionsmoduls und/ oder nach Funktionsdeaktivierung am Türantrieb ein optischer und/oder akustischer Alarm.

Für den Betrieb des Türantriebs hat es sich insbesondere als vorteilhaft erwiesen, wenn wenigstens eine der folgenden Situationen optisch oder akustisch angezeigt wird:
- der Aktivierungsfall,
- der Erweiterungsfall,
- das Einstecken eines Funktionsmoduls,
- das Entnehmen eines Funktionsmoduls,
- der Defektfall und/oder
- der Austauschfall.

Eine optische Anzeige erfolgt dabei vorzugsweise mittels eines Lichtelements, wie etwa einer LED und/oder einer OLED.

Ein erfindungsgemäßer Türantrieb weist ein Grundmodul, eine Rechnereinheit und einen Steckplatz auf. Mittels des Grundmoduls wird eine Mehrzahl von Funktionen des Türantriebs steuerbar bzw. ausführbar. In den im Grundmodul integrierten oder mit diesem gekoppelten Steckplatz ist ein Funktionsmodul derart reversibel integrierbar, dass das Funktionsmodul eine Aktivierung einer Funktion des Türantriebs ermöglicht. Der Steckplatz ist derart gestaltet, dass ein vorübergehender Austausch eines ersten Funktionsmoduls gegen ein zweites Funktionsmodul und ein erneutes Aufstecken des ersten Funktionsmoduls in den Steckplatz zu einer Aktivierung bzw. Freischaltung (einer) zweiten/r Funktion/en im Türantrieb führt. Dabei gelten Merkmale und einzelne Details, welche für das Verfahren beschrieben worden sind, auch im Zusammenhang mit dem erfindungsgemäßen Türantrieb.

Das Grundmodul und/oder die verwendbaren Funktionsmodule weisen vorzugsweise jeweils einen Bus-Kommunikationsanschluss auf. Diese Bus-Kommunikationsanschlüsse dienen dazu, das Grundmodul (und das aktuell eingesteckte Funktionsmodul) über einen Bus mit dem Türantrieb zu koppeln). Dieser Bus ist vorzugsweise gestaltet, den jeweiligen Türantrieb mit einem oder mehreren anderen Türantrieb/en kommunikationstechnisch zu verbinden bzw. zu verknüpfen. Insbesondere ist es möglich, eine Mehrzahl von Türantrieben mit einer zentralen Computereinheit zu verbinden, um so eine zentrale Steuerung zu ermöglichen. Die Buskopplung verringert die Anzahl zu verlegender Leitungen in und außerhalb des Türantriebs.

Solch ein Kommunikationsanschluss ist vorzugsweise ein RS485-Anschluss. Dieser ist besonders widerstandsfähig gegen äußere Einflüsse und erlaubt einen Datentransfer, der den Anforderungen eines modernen Türantriebs entspricht.

Weitere die Erfindung verbessernde Maßnahmen sind in den Unteransprüchen angegeben oder ergeben sich aus der nachfolgenden Beschreibung eines Ausführungsbeispiels der Erfindung, welches in den Figuren schematisch dargestellt ist. Sämtliche aus den Ansprüchen, der Beschreibung oder den Zeichnungen hervorgehenden Merkmale und/oder Vorteile, einschließlich konstruktiven Einzelheiten, räumliche Anordnungen und Verfahrensschritten, können sowohl für sich als auch in den verschiedensten Kombinationen erfindungswesentlich sein.

Es zeigen:
- Figur 1: eine schematische Anordnung eines Türantriebs an einer Tür,
- Figur 2: ein erstes Funktionsmodul,
- Figur 3: ein Einstecken des ersten Funktionsmoduls in ein Grundmodul,
- Figur 4: das eingesteckte erste Funktionsmodul bei einer Kommunikation des ersten Funktionsmoduls mit dem Grundmodul,
- Figur 5: das eingesteckte erste Funktionsmodul bei einer Übermittlung einer Identifikationsnummer an das erste Funktionsmodul,
- Figur 6: das eingesteckte erste Funktionsmodul nach der Übermittlung der Identifikationsnummer,
- Figur 7: einen Austausch des ersten Funktionsmoduls gegen ein zweites Funktionsmodul,
- Figur 8: eine das eingesteckte zweite Funktionsmodul bei einer Kommunikation des zweiten Funktionsmoduls mit dem Grundmodul,
- Figur 9: eine das eingesteckte zweite Funktionsmodul bei einer Entwertung des zweiten Funktionsmoduls,
- Figur 10: einen Austausch des zweiten Funktionsmoduls gegen das erste Funktionsmodul,
- Figur 11: das eingesteckte erste Funktionsmodul bei einer Kommunikation des Grundmoduls mit dem ersten Funktionsmodul und
- Figur 12: das erste eingesteckte Funktionsmodul nach Abschluss der Kommunikation.

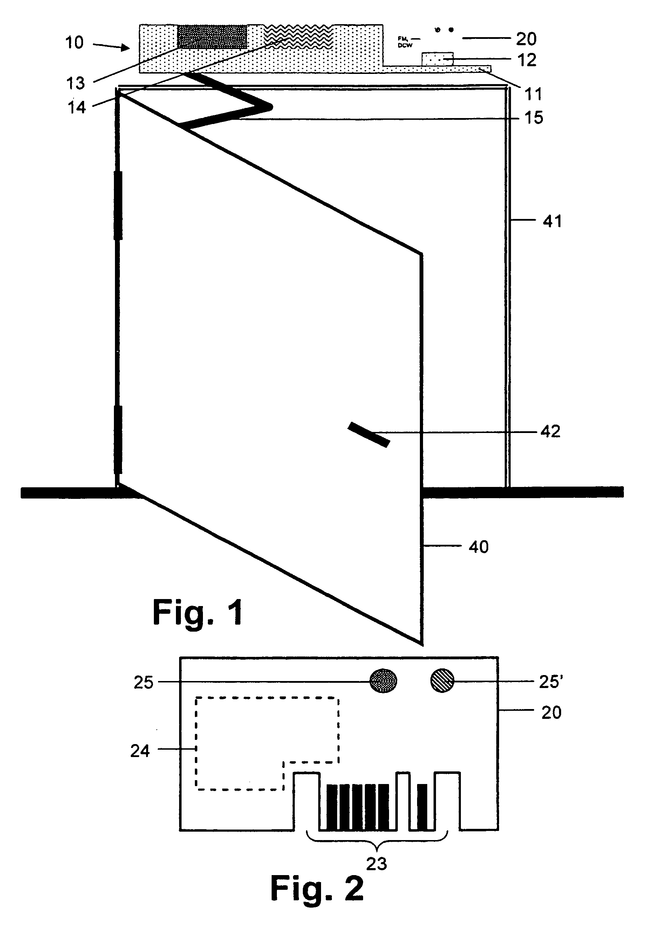

In Figur 1 ist eine typische Anordnung eines Türantriebs 10 gemäß einem Ausführungsbeispiel der Erfindung dargestellt. Der Türantrieb 10 ist oberhalb eines Türrahmens 41 einer Tür angeordnet. Der Türantrieb 10 weist eine mechanische oder elektromechanische Verstellmimik auf, die über ein Gestänge 15 mit einem Türblatt bzw. Türflügel 40 der Tür wirkverbunden ist. Je nach Wunsch, kann der Türantrieb 10 eine Mehrzahl von Funktionen aufweisen. So ist es beispielsweise denkbar, dass durch eine Berührung eines Türgriffs 42 der Tür ein vom Türantrieb 10 unterstütztes Öffnen des Türblatts 40 ausgelöst wird.

Um eine entsprechende Steuerung der verschiedenen Funktionen zu ermöglichen, weist der Türantrieb 10 ein Grundmodul 11 auf. An bzw. In dem Grundmodul 11 sind sämtliche mechanische und elektronische Komponenten angeordnet bzw. untergebracht, welche die gewünschten Funktionen des Türantriebs 10 ausführen. Im dargestellten Grundmodul 11 sind beispielhaft ein Kommunikationsanschluss 14 und eine Rechnereinheit 13 integriert, die zur Verarbeitung eines Computerprogramms ausgelegt ist, mittels dessen der Türantrieb 10 gesteuert wird. Darüber hinaus weist das Grundmodul 11 einen Steckplatz 12 auf, der im gezeigten Beispiel ein erstes Funktionsmodul 20 aufnimmt. Das erste Funktionsmodul 20 dient dazu, Funktionen des Türantriebs 10 zu aktivieren bzw. freizuschalten. Um eine kostengünstige Produktion zu ermöglichen, wird der erfindungsgemäße Türantrieb 10 derart ausgeliefert, dass im Türantrieb 10 bzw. dessen Grundmodul 11 bereits sämtliche Funktionen implementiert aber deaktiviert sind. Es ist folglich nicht erforderlich, für jeden Kundenauftrag funktional individuell ausgebildete Türantrieb 10 herzustellen, sondern es kann ein standardisierter Türantrieb 10 produziert werden.

Um einzelne Funktionen im Türantrieb 10 zu aktivieren, bedarf es zumindest des ersten Funktionsmoduls 20. Durch einen Kommunikationskontakt des ersten Funktionsmoduls 20 mit dem Grundmodul 11 wird ein entsprechender Aktivierungsimpuls ausgelöst, woraufhin im Grundmodul bzw. in der Rechnereinheit 13 eine Aktivierungsroutine gestartet wird. Im Anschluss daran ist bei normalem Betrieb die Funktionalität des Türantriebs 10 um zumindest eine zusätzlich nutzbare Funktion erweitert.

In Figur 2 ist das erste Funktionsmodul 20 vergrößert dargestellt. Das erste Funktionsmodul 20 weist im Wesentlichen ein Speicherelement 24 auf, in dem Informationen bzw. noch näher zu beschreibende Funktionscodes 21 hinterlegt sind.

Die Beschriftung "FM₁" dient vorrangig der optischen Unterscheidung von anderen Funktionsmodulen. Sie kann allerdings auch eine im Speicherelement 24 gespeicherte Kennung des Funktionsmoduls 20 darstellen.

Bei dem Speicherelement 24 kann es sich beispielsweise um einen integrierten Schaltkreis, wie einen FPGA oder einen Mikrocontroller, oder einen vorzugsweise nichtflüchtigen Speicher, wie beispielsweise ein EEPROM, handeln.

Für den Kontakt zwischen dem vorstehend beschriebenen Steckplatz 12 und dem ersten Funktionsmodul 20 weist dieses ein Kontaktelement 23 auf, das vorzugsweise in Form einer Steckleiste ausgebildet ist. Dabei kann es sich insbesondere um Steckkontakte handeln, die mit entsprechend federbelasteten Gegenelementen des Steckplatzes 12 zusammenwirken. Die Steckkontakte entsprechen vorzugsweise einem Anschluss-Standard, wie beispielsweise ISA oder PCI.

Für eine benutzerfreundliche Bedienung des ersten Funktionsmoduls 20 weist dieses vorzugsweise zwei optische Anzeigen 25, 25' auf. Die optischen Anzeigen 25, 25' dienen der Anzeige verschiedener Zustände des ersten Funktionsmoduls 20.

Das Verfahren zum Freischalten von Funktionen im Türantrieb 10 umfasst zumindest einen so genannten Aktivierungsfall, bei dem initial zumindest eine neue Funktion freigeschaltet wird.

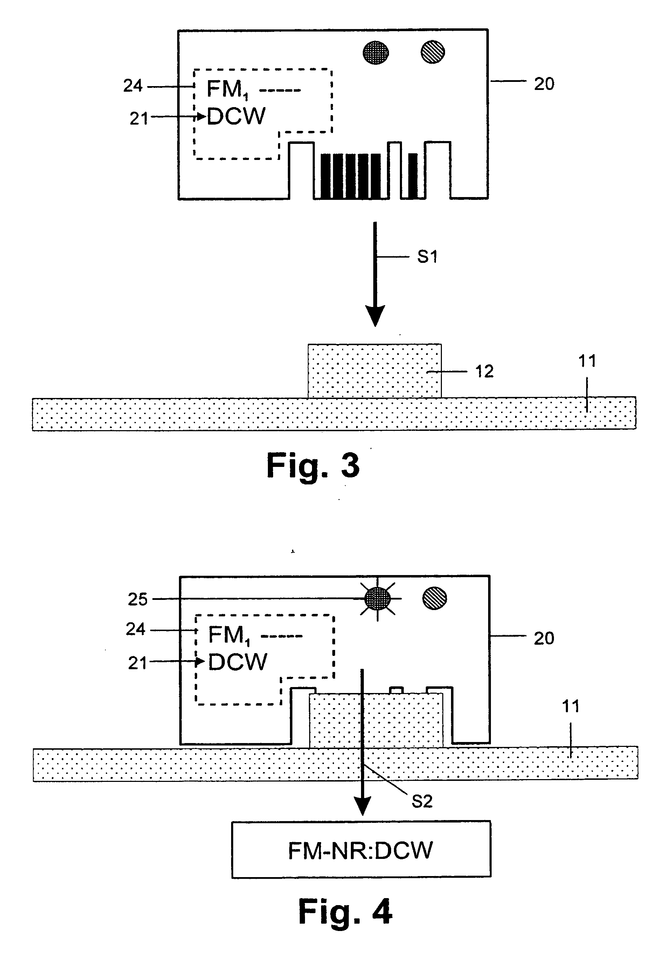

Figur 3 zeigt einen ersten Teil1 des Aktivierungsfalls. Dabei wird das erste Funktionsmodul 20 in einem ersten Schritt S1 in den Steckplatz 12 des Grundmoduls 11 eingeführt bzw. eingesetzt. Im Speicherelement 24 sind für das erste Funktionsmodul 20 charakterisierende Informationen hinterlegt. Das in Figur 3 dargestellte und mit FM₁ beschriftete erste Funktionsmodul 20 hat beispielhaft Information DCW bezüglich einer Bussystem-Funktion gespeichert. Im Speicherelement 24 ist dafür ein diese Funktion kennzeichnender erster Funktionscode 21 hinterlegt.

Nach dem Einstecken des ersten Funktionsmoduls 20 in den Steckplatz 12 wird dieser erste Funktionscode 21, in Figur 4 mit "FM-NR" gekennzeichnet, in einem Schritt S2 an das Grundmodul 11 übertragen bzw. übermittelt. Der Schritt S2 ist vorzugsweise dadurch realisiert, dass das Grundmodul 11 das Einstecken des ersten Funktionsmoduls 20 erkennt und daraufhin mit dem ersten Funktionsmodul 20 in Kommunikationskontakt tritt und die im Speicherelement 24 abgelegten Daten bzw. des ersten Funktionscodes 21 vom ersten Funktionsmodul 20 anfordert oder direkt ausliest.

Das Grundmodul 11 ermittelt daraufhin auf Basis der übermittelten Daten, welche Funktion freizuschalten ist. Um den Betrieb des ersten Funktionsmoduls 20 nach außen hin erkennbar zu machen, leuchtet im Aktivierungsfall die optische Anzeige 25 auf, die beispielhaft als grüne LED ausgeführt ist. So wird einem Benutzer angezeigt, dass zurzeit eine Kommunikation zwischen dem ersten Funktionsmodul 20 und dem Grundmodul 11 stattfindet, und zwar ein Lesevorgang in Richtung Grundmodul 11.

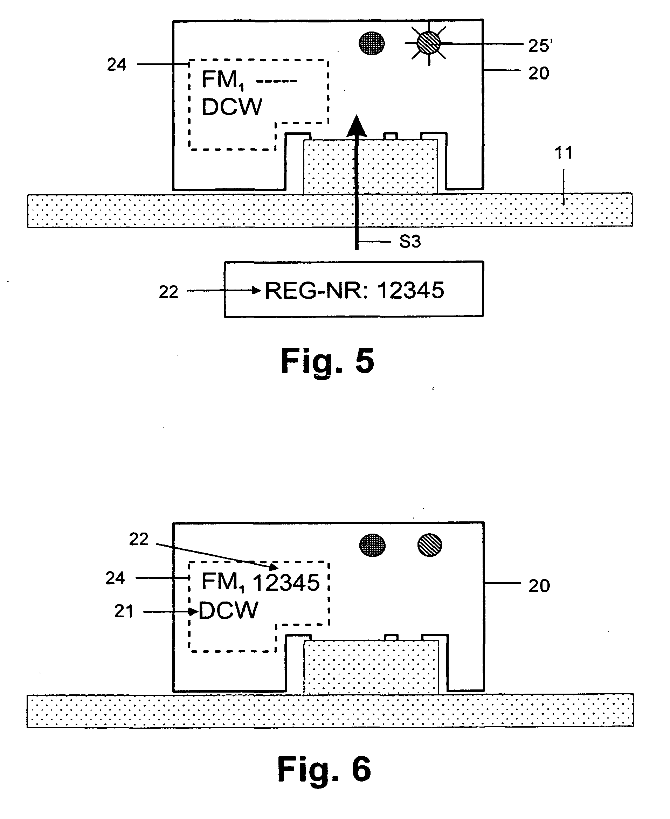

Nach dem Übermitteln des ersten Funktionscodes 21 erzeugt das Grundmodul 11 eine eindeutige erste Kennung 22, die gemäß Figur 5 mit "REG-NR" gekennzeichnet ist und beispielhaft den Wert "12345" aufweist. Daraufhin übermittelt das Grundmodul 11 die erzeugte erste Kennung 22 in einem Schritt S3 an das erste Funktionsmodul 20. Das erste Funktionsmodul 20 speichert die übermittelte erste Kennung 22 im Speicherelement 24, und zwar auf dem mittels "-----" gekennzeichneten, derzeit nicht belegten Speicherplatz. Dieser Vorgang kann gemäß Figur 5 von einem Leuchten nunmehr der Anzeige 25' begleitet sein, die beispielhaft als rote LED ausgeführt ist.

Die Erzeugung der ersten Kennung 22 kann beispielsweise mittels Auswählens einer in einer im Türantrieb 10, im Grundmodul 11 oder in der Rechnereinheit 13 gespeicherten Tabelle mit Kennungen erfolgen, oder das Grundmodul 11 errechnet die erste Kennung 22 beispielsweise aufgrund einer eindeutigen Kennung des Türantriebs 10 und der vom ersten Funktionsmodul 20 übermittelten Information.

Das Speichern der ersten Kennung 22 im ersten Funktionsmodul 20 kann mittels direkten Schreibens vom Grundmodul 11 ausgeführt werden. Alternativ sendet das Grundmodul 11 einen Befehl mit der erzeugten ersten Kennung 22 an das erste Funktionsmodul 20, das daraufhin den Speichervorgang ausführt. Vorzugsweise prüft das Grundmodul 11 beispielsweise mittels Auslesens des Speicherelements 24, ob die Kennung im ersten Funktionsmodul 20 korrekt abgelegt wurde. Ist alles erfolgreich verlaufen, speichert das Grundmodul 11 die erzeugte erste Kennung 22 zusätzlich in einem eigenen Speicher und schaltet daraufhin die ermittelte freizuschaltende Funktion frei.

Figur 6 zeigt den Zustand des ersten Funktionsmoduls 20 nach Abschluss des Speicherns aller vorstehend erläuterten Schritte. Wie zu erkennen, enthält der gemäß Figuren 3 - 5 nicht belegte Speicherplatz nunmehr die übermittelte erste Kennung 22. Das nicht dargestellte Speicherelement 24 beinhaltet somit nun neben dem Funktionscode 21 vorzugsweise zusätzlich die Identifikationsnummer 22.

Das Speichern der ersten Kennung 22 im ersten Funktionsmodul 20 bewirkt, wie später erläutert, eine Entwertung des ersten Funktionsmoduls 20.

Die vorstehend beschriebene Basiskommunikation zwischen Grundmodul 11 und erstem Funktionsmodul 20 läuft im Aktivierungsfall ab. Die Besonderheit besteht vorrangig darin, dass für jeden Türantrieb 10 dieser Aktivierungsvorgang nur einmal durchgeführt werden kann. Dies hat damit zu tun, dass der Aktivierungsfall nur ausführbar ist, wenn im Grundmodul 11 keine einzige Kennung abgelegt ist, die eine freizuschaltende zusätzliche Funktion kennzeichnet. Folglich übernimmt jedes Funktionsmodul, das im Aktivierungsfall somit als erstes in Kommunikationskontakt mit dem Grundmodul 11 gelangt, die Rolle des vorstehend beschriebenen ersten Funktionsmoduls 20.

Jedem Funktionsmodul ist im Allgemeinen lediglich ein Funktionscode zugeordnet. Folglich kann durch das Einstecken eines jeweiligen Funktionsmoduls in das Grundmodul 11 jeweils eine zusätzliche Funktion im Türantrieb 10 freigeschaltet bzw. aktiviert werden.

Möchte ein Nutzer des Türantriebs 10 noch eine andere zusätzliche, derzeit nicht nutzbare Funktion nutzen, muss auch diese wieder aktiviert werden. Dies geschieht in einem so genannten Erweiterungsfall.

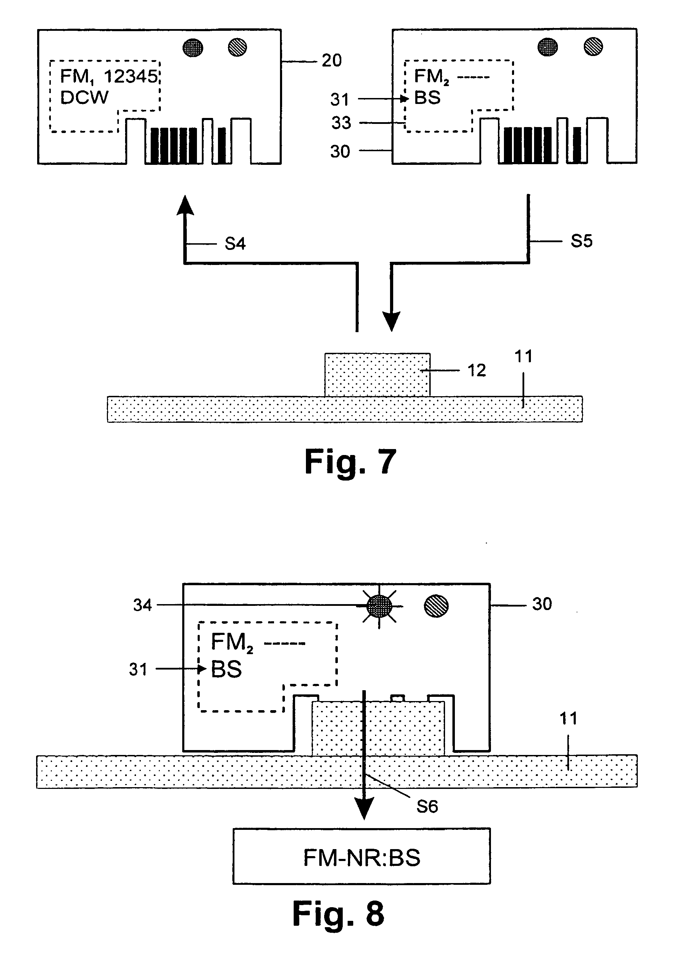

Wie in Figur 7 gezeigt, wird im Erweiterungsfall zunächst das sich im Steckplatz 12 des Grundmoduls 11 befindliche erste Funktionsmodul 20 in einem Schritt S4 vom Steckplatz 12 entfernt. Daraufhin wird in einem Schritt S5 ein zweites Funktionsmodul 30 in den Steckplatz 12 eingesetzt. Das zweite Funktionsmodul 30 weist einen Information BS bezüglich einer zweiten Funktion in Form eines zweiten Funktionscode 31 auf, der somit eine zweite Funktion kennzeichnet. Die Beschriftung "FM₂" beim zweiten Funktionsmodul 30 dient wiederum vorrangig der optischen Unterscheidung vom ersten, mit "FM₁" beschrifteten ersten Funktionsmodul 20. Wie zu erkennen, weist das zweite Funktionsmodul 30 wiederum ein Speicherelement 33 mit einem Speicherplatz auf, der initial analog dem ersten Funktionsmodul 20 keine Kennung aufweist sondern wieder beispielhaft mit "-----" belegt ist.

Nach dem Einstecken des zweiten Funktionsmoduls 30 wird gemäß Figur 8 analog zu Figur 4 in einem Schritt S6 der Funktionscode 31 vom zweiten Funktionsmodul 30 zum Grundmodul 11 übertragen. Auch hier wird der Lesevorgang des Grundmoduls vorzugsweise von einem Leuchten einer optischen Anzeige 34 begleitet, die beispielhaft wieder als grüne LED ausgeführt ist.

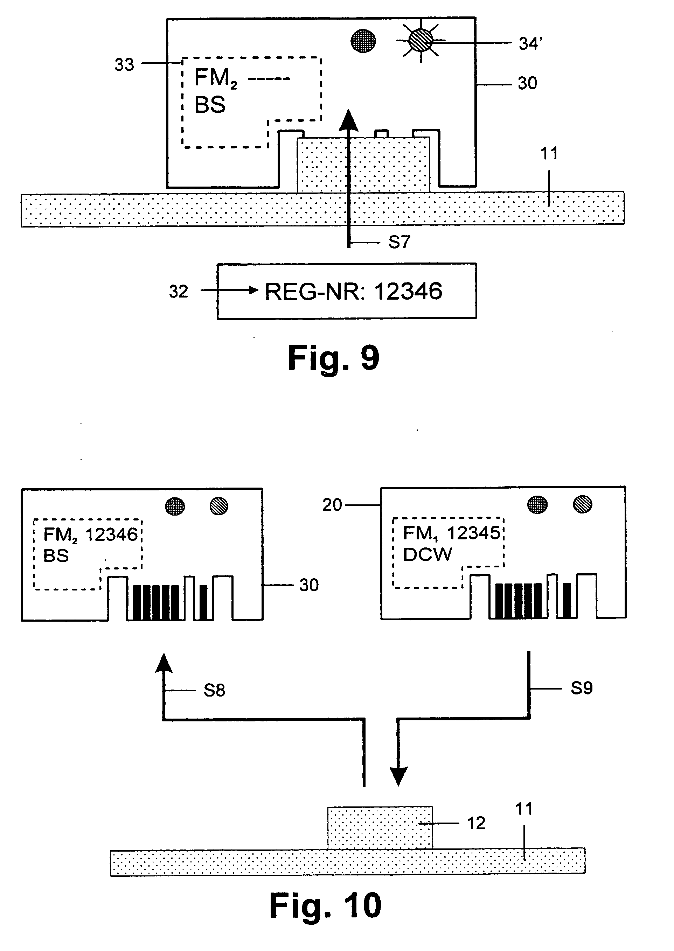

Analog zu der Beschreibung in Bezug auf Figuren 5 und 6 wird, wie in Figur 9 dargestellt, im Grundmodul 11 eine neue, zweite eindeutige Kennung 32, gemäß Figur 9 beispielhaft "12346", erzeugt und in einem Schritt S7 an das zweite Funktionsmodul 30 übermittelt und dort analog zum ersten Funktionsmodul 20 im Speicherelement 33 abgespeichert wird. Da das zweite Funktionsmodul 30 keine Containermodul-Funktion übernimmt, kann die zweite Kennung 32 im einfachsten Fall ein Flag-Bit sein, das kennzeichnet, dass dieses zweite Funktionsmodul für eine Freischaltung der beispielhaften "BS"-Funktion nicht mehr zur Verfügung steht. Dieser Vorgang kann wiederum von einem Leuchten nunmehr der Anzeige 34' begleitet sein, die beispielhaft ebenfalls als rote LED ausgeführt ist.

Vorzugsweise prüft das Grundmodul 11 erneut den Erfolg des Abspeicherns der zweiten Kennung 32. Bei erkanntem erfolgreichen Abspeichern speichert das Grundmodul 11 die zweite Kennung 32 im eigenen Speicher.

Die zweite Kennung 32 dient somit lediglich der Kennzeichnung des zweiten Funktionsmoduls 30 als nicht mehr verwendbar für eine Freischaltung der in ihr abgelegten Funktion. Das zweite Funktionsmodul 30 befindet sich in einem so genannten Passivzustand Aufgrund dessen kann das Grundmodul 11 in seinem Speicher anstelle der zweiten Kennung 32 den vom zweiten Funktionsmodul 30 übermittelten zweiten Funktionscode 31 abspeichern.

Die Aktivierung der optischen Anzeigen 34, 34' des zweiten Funktionsmoduls 30 erfolgt vorzugsweise in der gleichen Weise wie beim ersten Funktionsmodul 20. Nach erfolgtem Abspeichern der zweiten Kennung 32 im zweiten Funktionsmodul 30 kann beispielsweise mittels Erlöschens beider Anzeigen 34, 34' signalisiert werden, dass der Vorgang für das zweite Funktionsmodul 30 abgeschlossen ist.

Daraufhin wird, wie in Figur 10 gezeigt, das zweite Funktionsmodul 30 in einem Schritt S8 vom Steckplatz 12 des Grundmoduls 11 wieder entfernt und das erste Funktionsmodul 20 in einem darauf folgenden Schritt S9 in den Steckplatz 12 wieder eingesetzt.

Das Grundmodul 11 prüft daraufhin vorzugsweise zunächst, ob es sich um das erste Funktionsmodul 20 handelt oder nicht. Ist dies nicht der Fall, kann vorgesehen sein, das neu eingesteckte Funktionsmodul abzuweisen.

Alternativ wird das neu eingesteckte Funktionsmodul wieder als zweites Funktionsmodul 30 behandelt, um im Türantrieb 10 eventuell noch eine Funktion freizuschalten. In dem Fall entspricht das darauf folgende Verfahren dem vorstehenden Verfahren ab dem Zeitpunkt, zu dem zweite Funktionsmodul 30 in den Steckplatz 12 eingesteckt war, also ab Figur 8. Diese Vorgehensweise erlaubt es, alle gewünschten zusätzlichen, mittels zweiter Funktionsmodule 30 freischaltbaren Funktionen im Türantrieb 10 zu aktivieren, bevor das erste Funktionsmodul 20 final wieder aufgesteckt wird. Dies stellt für einen Nutzer eine Vereinfachung sowie Zeitersparnis dar, da das mehrmalige Wiederaufstecken des ersten Funktionsmoduls 20 zwischendurch entfällt.

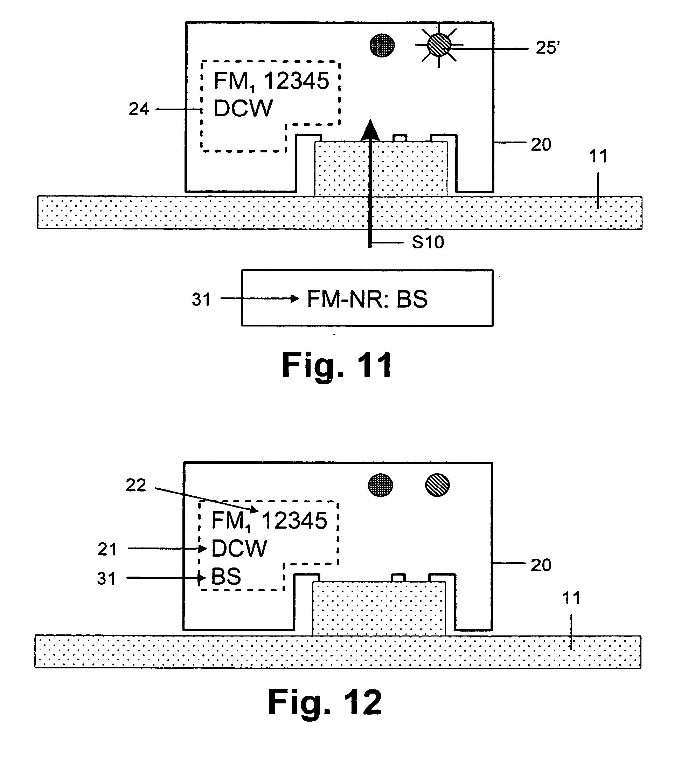

Handelt es sich bei dem neu eingesteckten Funktionsmodul um das erste Funktionsmodul 20, wird gemäß Figur 11 in einem Schritt S10 vom Grundmodul 11 nunmehr der zweite Funktionscode 31 zum ersten Funktionsmodul 20 übermittelt und analog der ersten Kennung 22 im Speicherelement 24 des ersten Funktionsmoduls 20 gespeichert. Dies wird beispielhaft wieder von einem Leuchten der optischen Anzeige 25' begleitet.

Ist vorzugsweise wiederum nach einer Prüfung des Erfolgs des Abspeicherns der zweiten Kennung 32 im ersten Funktionsmodul 20 durch das Grundmodul 11 ermittelt, das alles reibungslos vonstatten gegangen ist, schaltet das Grundmodul 11 nunmehr die mittels des zweiten Funktionsmoduls 30 repräsentierte Funktion frei.

Die vorstehend erwähnten Kennungen können auch mittels Funktionscodes 21, 31 gebildet sein, die im jeweiligen Funktionsmodul 20, 30 abgelegt sind.

Vorzugsweise ist vorgesehen, dass das Grundmodul 11 nach Einstecken eines Funktionsmoduls prüft, ob eine Freischaltung von Funktionen möglich ist oder nicht. Dazu prüft das Grundmodul 11 zunächst, wie vorstehend beschrieben, ob das neu eingesetzte Funktionsmodul als zweites Funktionsmodul 30 zu behandeln ist oder nicht. Wenn ja, wird geprüft, ob in diesem Funktionsmodul eine Kennung hinterlegt ist oder nicht. Wenn ja, behandelt das Grundmodul 11 das Funktionsmodul so, dass eine Freischaltung zusätzlicher Funktionen nicht möglich ist. Dies kann beispielsweise von einem Blinken der optischen Anzeige 34' begleitet sein. D. h. das Vorhandensein einer Kennung ist für das Grundmodul 11 ein Hinweis, dass das Funktionsmodul bereits verwendet worden ist. Damit ist ein sicherer Schutz vor Missbrauch geschaffen.

Um eine zusätzliche Funktion wieder zu deaktivieren, ist bei dem vorstehend beschriebenen Verfahren vorzugsweise zusätzlich ein Deaktivierungsfall vorgesehen. Dieser Fall kann auftreten, wenn eine Tür beispielsweise keine Feststellfunktion mehr benötigt. Die im Deaktivierungsfall abzuarbeitenden Schritte sind im Wesentlichen gleich denen im Erweiterungsfall.

Es gibt folgende Unterschiede: In einem vorzugsweise ersten Schritt wird der Türantrieb 10 in einen Deaktivierungszustand geschaltet. Dies kann beispielsweise mittels eines Programmschalters geschehen. Daraufhin prüft das Grundmodul 11, ob die zu deaktivierende Funktion aufgrund des ersten Funktionsmoduls 20 freigeschaltet wurde oder nicht. Dies kann beispielsweise dadurch erfolgen, dass geprüft wird, ob das erste Funktionsmodul 20 Funktionscodes beinhaltet, denen keine Kennung zugewiesen ist. Ist dies nicht der Fall, ist dies ein Zeichen für das Grundmodul 11, dass die zu deaktivierende Funktion aufgrund des ersten Funktionsmoduls 30 erfolgte. In dem Fall werden die erste Kennung 22 im ersten Funktionsmodul 20 und im Grundmodul 11 gelöscht und im Türantrieb 10 die entsprechende Funktion deaktiviert.

Andernfalls prüft das Grundmodul 11 nach Entfernen des ersten Funktionsmoduls 20 und Einsetzen eines zweiten Funktionsmoduls 30, ob das zweite Funktionsmodul 30 einen Funktionscode 31 für eine zu deaktivierende Funktion beinhaltet oder nicht, und ob dieser Funktionscode 31 auch im ersten Funktionsmodul 20 abgelegt ist. Ist dies nicht der Fall, wird die Deaktivierung nicht durchgeführt und vorzugsweise mittels beispielsweise Blinkens der optischen Anzeige 34' des zweiten Funktionsmoduls 30 angezeigt.

Andernfalls prüft das Grundmodul 11 nun, ob im zweiten Funktionsmodul 30 eine zweite Kennung 32 hinterlegt ist oder nicht. Wenn nicht, kann das zweite Funktionsmodul aktuell nur zum Freischalten aber nicht zum Deaktivieren einer Funktion verwendet werden. Daher wird auch hier die Deaktivierung nicht durchgeführt und vorzugsweise wiederum mittels Blinkens der optischen Anzeige 34' angezeigt.

Andernfalls wird der Schritt des Erzeugens einer zweiten Kennung 32 gemäß dem Erweiterungsfall übersprungen. Stattdessen wird in einem zu Schritt S7 analogen Schritt der Speicherplatz im Speicherelement 33 des zweiten Funktionsmoduls 30 gelöscht, auf dem die zweite Kennung 32 abgelegt ist.

Nach Entfernen des zweiten Funktionsmoduls 30 und Wiedereinsetzen des ersten Funktionsmoduls 20 wird der gleiche Funktionscode 32 im ersten Funktionsmodul 20 gelöscht. Zugleich deaktiviert das Grundmodul 11 diese Funktion im Türantrieb 10. Danach muss der Türantrieb 10 lediglich wieder in den Normalbetriebszustand geschaltet werden.

Es ist möglich, dass ein Funktionsmodul zum Freischalten mehrerer Funktionen eingerichtet ist. Dazu weist es für jede freizuschaltende Funktion einen eigenen Funktionscode und einen eigenen Speicherplatz für eine Kennung 22, 32 auf. Im einfachsten Fall ist im jeweiligen Speicherelement 24, 33 eine zweispaltige Tabelle abgelegt, die eine Abbildung von einem jeweiligen Funktionscode 21, 31 auf eine zugehörige Kennung 22, 32 aufweist. Das Grundmodul 11 ermittelt in dem Fall, welche Funktion(en) zur Freischaltung zur Verfügung steht/en. Einem Nutzer kann dann beispielsweise über eine OLED-Anzeige beispielsweise am Funktionsmodul 20, 30 eine Auswahl der freizuschaltenden Funktionen angeboten werden, die dann beispielsweise mittels Betätigens einer speziellen Taste am Türantrieb 10 oder am Funktionsmodul 20, 30 selbst erfolgt.

Da das vorstehend beschriebene Verfahren für die beschriebenen Fälle, also den Aktivierungsfall, den Erweiterungsfall, den Deaktivierungsfall, jeweils sehr ähnlich und sehr einfach gehalten ist, ist im Speicher des Grundmoduls 11 relativ wenig Speicherplatz erforderlich.

Neben dem vorstehend beschriebenen Aktivierungsfall und Erweiterungsfall weist das Verfahren zusätzlich vorzugsweise einen Austauschfall auf. Dieser Fall kann auftreten, wenn das Grundmodul 11 oder gar der Türantrieb 10 einen Defekt aufweist und daher gegen ein neues Teil ersetzt werden muss. Ist das Grundmodul 11 ersetzt, sind initial alle möglichen zusätzlichen Funktionen deaktiviert.

Allerdings weisen alle zum Freischalten der zusätzlichen Funktionen des defekten Türantriebs 10 verwendeten ersten und zweiten Funktionsmodule 20, 30 jeweils Kennungen 22, 32 auf, sodass sie nicht zum Freischalten der betreffenden Funktionen im neuen Türantrieb 10 verwendet werden können. Daher ist im Austauschfall vorgesehen, den Türantrieb 10 bzw. das Grundmodul 11 beispielsweise mittels eines Programmschalters in einen Austauschzustand zu bringen bzw. zu schalten. Daraufhin wird das vom defekten Türantrieb 10 stammende erste Funktionsmodul 20 in den Steckplatz des neuen Grundmoduls 11 gesteckt. Daraufhin erkennt das Grundmodul 11, dass das Funktionsmodul 20 aufgrund der darin gespeicherten Kennungen bereits "vergeben" ist. Aufgrund des Austauschzustands wird das Grundmodul 11 allerdings veranlasst, alle im ersten Funktionsmodul 20 gespeicherten Funktionscodes 21, 31 und Kennung(en) 22 zu übernehmen, im eigenen Speicher abzulegen und die zugehörigen Funktionen im Türantrieb 10 freizuschalten. Danach muss der Türantrieb 10 lediglich wieder in den Normalbetriebszustand geschaltet werden.

In Verbindung mit der vorstehend angegebenen möglichen Zeitspanne, innerhalb der ein Türantrieb 10 zusätzliche Funktionen freigeschaltet lässt, ohne dass ein Funktionsmodul 20, 30 eingesetzt sein muss, kann der Austauschfall auch genutzt werden, um ganze Funktionskonfigurationen von einem Türantrieb 10 auf einen anderen zu übertragen, ohne dass ein vorheriges Löschen der zusätzlichen Funktionen in dem einen Türantrieb 10 und der Einsatz zweiter Funktionsmodule 30 erforderlich wären.

Wird, wie vorstehend beschrieben, als zweite Kennung 32 ein allgemeingültiger Wert, wie beispielsweise ein Flag, verwendet, können die zweiten Funktionsmodule 30 zudem universell eingesetzt werden. Beispielsweise kann ein zweites Funktionsmodul 30 bei einem Türantrieb 10 zum Freischalten einer Funktion und daraufhin bei einem anderen Türantrieb 10 zum Deaktivieren derselben Funktion verwendet werden. D. h. ein Kunde muss nicht für jeden Türantrieb 10 wissen, welche zweiten Funktionsmodule 30 zum Freischalten verwendet wurden, nur die Funktionscodes 31 müssen stimmen.

Für den Fall eines Defekts im Türantrieb 10 weist das Verfahren ferner einen Defektfall auf. Zunächst wird bei eingesetztem ersten Funktionsmodul 20 dieses vom Steckplatz 12 entfernt. Danach wird ein Testmodul in den Steckplatz 12 eingesetzt. Vorzugsweise ist das Testmodul eingerichtet, das Einstecken zu erkennen. Dies kann beispielsweise mittels Prüfens des Anliegens einer Versorgungsspannung an einem speziellen Kontakt erfolgen. Daraufhin prüft vorzugsweise das Testmodul den Türantrieb 10 bzw. dessen Grundmodul 11.

Alternativ beginnt das Grundmodul 11 nach Erkennen des Testmoduls automatisch eine Testroutine, in der das Grundmodul 11 einen Selbsttest ausführt.

Schlägt der Selbsttest fehl, ist das Grundmodul 11 defekt. Dies wird vorzugsweise mittels einer optischen Anzeige am Testmodul angezeigt. Daraufhin kann das Grundmodul 11 bzw. der Türantrieb 10 gewechselt und daraufhin gemäß dem vorstehend beschriebenen Austauschfall neu initialisiert werden.

Ist der Test erfolgreich, ist davon auszugehen, dass das erste Funktionsmodul 20 defekt ist. In dem Fall ist vorzugsweise vorgesehen, ein Funktionsmodul einzusetzen, das in einen besonderen Initialisierungszustand geschaltet ist. Dieser Initialisierungszustand zeigt dem Grundmodul 11 an, dass es seine Informationen hinsichtlich der freigeschalteten Funktionen, also die Funktionscodes 21, 31 und die erzeugte erste Kennung 22, auf das neu eingesetzte, als erstes Funktionsmodul zu behandelnde Funktionsmodul aufzuspielen hat. In dem Fall ist beispielsweise herstellerseitig eine Zeitspannenüberwachung des Türantriebs 10 zu deaktivieren, um ein Deaktivieren der Funktionen im Türantrieb zu verhindern.

Auch wenn die Erfindung so beschrieben wurde, dass das gesamte Verfahren innerhalb des Grundmoduls 11 vonstatten geht, ist sie nicht darauf beschränkt. Beispielsweise kann die Rechnereinheit 13 vorgesehen sein, das vorstehend beschriebene Verfahren auszuführen. Zudem kann die Rechnereinheit 13 ebenfalls über einen Speicher verfügen, der beispielhaft als Speicher oder als Backup-Speicher für die Daten dient, die vom Grundmodul 11 bzw. der Rechnereinheit 13 abzuspeichern sind.

Da, wie vorstehend beschrieben, alle Funktionsmodule gleich ausgebildet sind und eingerichtet sind, sowohl die Rolle eines ersten Funktionsmoduls 20 als auch die eines zweiten Funktionsmoduls 30 einzunehmen, können standardisierte Funktionsmodule hergestellt werden, was die Herstellungskosten senken hilft.

Im Ergebnis ist durch die Erfindung ein universelles, einfaches und sicheres Verfahren bereitgestellt, das auf das Zu- und Abschalten von (Zusatz-) Funktionen bei Türantrieben ermöglicht.

### Bezugszeichenliste

- 10: Türantrieb
- 11: Grundmodul
- 12: Steckplatz
- 13: Rechnereinheit
- 14: Kommunikationsanschluss
- 15: Gestängearm

- 20: erstes Funktionsmodul
- 21: erster Funktionscode
- 22: erste Kennung
- 23: Kontaktelement
- 24: Speicherelement
- 25, 25': optische Anzeige

- 30: zweites Funktionsmodul
- 31: zweiter Funktionscode
- 32: zweite Kennung
- 33: Speicherelement
- 34, 34': optische Anzeige

- 40: Türblatt
- 41: Türrahmen
- 42: Türgriff

- BS: Information über eine Türantriebs-Funktion
- DCW: Information über eine Türantriebs-Funktion

- S1: Schritt des Einsteckens des ersten Funktionsmoduls
- S2: Schritt des Übermittelns des ersten Funktionscodes
- S3: Schritt des Übermittelns der ersten Kennung
- S4: Schritt des Entnehmens des ersten Funktionsmoduls
- S5: Schritt des Einsteckens des zweiten Funktionsmoduls
- S6: Schritt des Übermittelns des zweiten Funktionscodes
- S7: Schritt des Übermittelns der zweiten Kennung
- S8: Schritt des Entnehmens des zweiten Funktionsmoduls
- S9: Schritt des Einsteckens des ersten Funktionsmoduls
- S10: Schritt des Übermittelns der zweiten Kennung

## Patentansprüche

1. Verfahren zum Betrieb eines Türantriebs (10), aufweisend einen Aktivierungsfall, umfassend die Schritte:
• Einstecken (S1) eines ersten Funktionsmoduls (20) in einen Steckplatz (12) des Türantriebs (10), das erste Information (DCW) über zumindest eine freizuschaltende Funktion beinhaltet,
• Übermitteln (S2) der ersten Information (DCW) an den Türantrieb (10),
• im Türantrieb (10), Ermitteln der zumindest einen freizuschaltenden Funktion auf Basis der übermittelten ersten Information (DCW),
• im Türantrieb (10), Erzeugen einer eindeutigen, ersten Kennung (22),
• Übermitteln (S3) der erzeugten ersten Kennung (22) an das erste Funktionsmodul (20),
• Speichern der übermittelten ersten Kennung (22) im ersten Funktionsmodul (20) und
• im Türantrieb (10), Freischalten der ermittelten, zumindest einen freizuschaltenden Funktion (DCW).

2. Verfahren nach Anspruch 1, wobei der Schritt des Freischaltens der zumindest einen freizuschaltenden Funktion (DCW) nur dann erfolgt, wenn
• der Türantrieb (10) vorher geprüft hat, ob das Speichern der übermittelten ersten Kennung (22) im ersten Funktionsmodul (20) erfolgreich war und
• das Prüfergebnis ein erfolgreiches Speichern der übermittelten ersten Kennung (22) im ersten Funktionsmodul (20) kennzeichnet.

3. Verfahren nach Anspruch 1 oder 2, ferner aufweisend den Schritt des Speicherns der erzeugten ersten Kennung (22) im Türantrieb (10).

4. Verfahren nach Anspruch 2 und 3, wobei der Schritt des Speichems der erzeugten ersten Kennung (22) im Türantrieb (10) nur dann erfolgt, wenn das Prüfergebnis ein erfolgreiches Speichern der übermittelten ersten Kennung (22) im ersten Funktionsmodul (20) kennzeichnet.

5. Verfahren nach einem der vorhergehenden Ansprüche, ferner aufweisend einen Erweiterungsfall, umfassend die Schritte:
• Entfernen (S4) des ersten Funktionsmoduls (20) vom Steckplatz (12) des Türantriebs (10),
• Einstecken (S5) eines zweiten Funktionsmoduls (30) in den Steckplatz (12) des Türantriebs (10), das zweite Information (BS) über zumindest eine andere freizuschaltende Funktion beinhaltet,
• Übermitteln (S6) der zweiten Information (BS) an den Türantrieb (10),
• im Türantrieb (10), Ermitteln der zumindest einen anderen freizuschaltenden Funktion auf Basis der übermittelten zweiten Information (BS),
• im Türantrieb (10), Erzeugen einer zweiten Kennung (32),
• Übermitteln (S7) der zweiten Kennung (32) an das zweite Funktionsmodul (30),
• Speichern der übermittelten zweiten Kennung (32) im zweiten Funktionsmodul (30),
• Entfernen (S8) des zweiten Funktionsmoduls (30) vom Steckplatz (12) des Türantriebs (10),
• erneutes Einsetzen (S9) des ersten Funktionsmoduls (20) in den Steckplatz (12) des Türantriebs (10) und
• Übermitteln (S10) der übermittelten zweiten Information (BS) an das erste Funktionsmodul (20),
• Speichern der übermittelten zweiten Information (BS) im ersten Funktionsmodul (20) und
• im Türantrieb (10), Freischalten der ermittelten zumindest einen anderen freizuschaltenden Funktion.

6. Verfahren nach Anspruch 5, wobei der Schritt des Freischaltens der zumindest einen anderen freizuschaltenden Funktion nur dann erfolgt, wenn
• der Türantrieb (10) vorher geprüft hat, ob das Speichern der übermittelten zweiten Kennung (32) im zweiten Funktionsmodul (30) und/oder der zweiten Information (BS) im ersten Funktionsmodul (20) erfolgreich war, und
• das Prüfergebnis ein erfolgreiches Speichern der übermittelten zweiten Kennung (32) im zweiten Funktionsmodul (30) und/oder der zweiten Information (BS) im ersten Funktionsmodul (20) kennzeichnet.

7. Verfahren nach Anspruch 5 oder 6, ferner aufweisend den Schritt des Speicherns der zweiten Information (BS) im Türantrieb (10).

8. Verfahren nach Anspruch 6 und 7, wobei der Schritt des Speichems der erzeugten zweiten Information (BS) im Türantrieb (10) nur dann erfolgt, wenn das Prüfergebnis ein erfolgreiches Speichern der übermittelten zweiten Kennung (32) im zweiten Funktionsmodul (30) und/oder der zweiten Information (BS) im ersten Funktionsmodul (20) kennzeichnet.

9. Verfahren nach einem der vorhergehenden Ansprüche, wobei die erste Information (DCW) ein erster Funktionscode (21) ist und/oder die zweite Information (BS) ein zweiter Funktionscode (31) ist.

10. Verfahren nach Anspruch 9, wobei die erste Kennung (22) mittels des ersten Funktionscodes (21) gebildet ist und/oder die zweite Kennung (32) mittels des zweiten Funktionscodes (31) oder eines Flag-Bits gebildet ist.

11. Verfahren nach Anspruch 9 oder 10, wobei die übermittelte zweite Information (BS) mittels des zweiten Funktionscodes (31) gebildet ist.

12. Verfahren nach einem der vorherigen Ansprüche, ferner aufweisend einen Austauschfall, umfassend die Schritte:
• Entfernen des ersten Funktionsmodul (20) vom Steckplatz (12) des Türantriebs (10),
• Tauschen eines Grundmoduls (11) des Türantriebs (10) gegen ein zweites Grundmodul (11),
• Einsetzen des ersten Funktionsmoduls (20) in den Steckplatz (12) des Türantriebs (10) und
• im zweiten Grundmodul (11):
- Übernehmen der ersten Kennung (22) und/oder der Information (DCW, BS) über die freizuschaltende/n Funktion/en und
- im Türantrieb (10), Freischalten der freizuschaltende/n Funktion/en.

13. Verfahren nach einem der vorherigen Ansprüche, ferner aufweisend, unmittelbar folgend dem Entfernen eines Funktionsmoduls (20, 30) vom Steckplatz (12) des Türantriebs (10):
• Prüfen, wie lange in dem Steckplatz (12) des Türantriebs (10) kein Funktionsmodul (20, 30) eingesetzt ist, und
• bei Überschreiten einer vorbestimmten Zeitdauer, im Türantrieb (10), Deaktivieren aller freigeschalteten Funktionen.

14. Verfahren nach einem der vorhergehenden Ansprüche, aufweisend einen Defektfall, umfassend die Schritte:
• Entfernen des eingesteckten Funktionsmoduls (20, 30) vom Steckplatz (12) des Türantriebs (10),
• Einstecken eines Testmoduls in den Steckplatz (12) des Türantriebs (10) und
• Aktivieren einer Testroutine im Türantrieb (10) und/oder im Testmodul.

15. Verfahren nach einem der vorherigen Ansprüche, wobei die Funktionsmodule (20, 30) ferner eine optische Anzeige (25, 25'; 34, 34') zum Anzeigen vorbestimmter Zustände aufweisen.

16. Türantrieb (10) mit einem Grundmodul (11), einer Rechnereinheit (13) und einem Steckplatz (12), wobei
• mittels des Grundmoduls (11) eine Mehrzahl von Funktionen des Türantriebs (10) ausgeführt wird und
• der Türantrieb (10) zum Ausführen eines Verfahrens nach einem der vorgenannten Ansprüche ausgebildet ist, indem die vom Tür-' antrieb (10) auszuführenden Schritte von dem Grundmodul (11) oder der Rechnereinheit (13) ausgeführt werden.

17. Türantrieb (10) nach Anspruch 16, wobei das Grundmodul (11) und/oder das erste Funktionsmodul (20) und/oder das zweite Funktionsmodul (30) einen Kommunikationsanschluss (14) aufweisen.

## Claims

1. A method for operating a door drive (10), including an activating scenario, comprising the steps of:
• inserting (S1) a first functional module (20) into a slot (12) of the door drive (10), which includes first information (DCW) on at least one function to be enabled,
• transmitting (S2) the first information (DCW) to the door drive (10),
• in the door drive (10), detecting the at least one function to be enabled based on the transmitted first information (DCW).
• in the door drive (10), generating a unique first identification (22),
• transmitting (S3) the generated first identification (22) to the first functional module (20),
• storing the transmitted identification (22) in the first functional module (20), and
• in the door drive (10), enabling the detected at least one function (DCW) to be enabled.

2. The method according to claim 1, wherein the step of enabling the at least one function (DCW) to be enabled is only performed if
• the door drive (10) has previously checked whether or not storing the transmitted first identification (22) in the first functional module (20) was successful, and
• the test result is identified by a successful storing of the transmitted first identification (22) in the first functional module (20).

3. The method according to claim 1 or 2, furthermore including the step of storing the generated first identification (1) in the door operator (2).

4. The method according to claim 2 and 3, wherein the step of storing the generated first identification (22) in the door drive (10) is effected exclusively, if the test result is identified by a successful storing of the transmitted first identification (22) in the first functional module (20).

5. The method according to any of the preceding claims, furthermore including an expansion scenario, comprising the steps of:
• removing (S4) the first functional module (20) from the slot (12) of the door drive (10),
• inserting (S5) a second functional module (30) into the slot (12) of the door drive (10), which includes a second information (BS) on at least one other function to be enabled,
• transmitting (S6) the second information (BS) to the door drive (10),
• in the door drive (10), detecting the at least one other function to be enabled based on the transmitted second information (BS),
• in the door drive (10), generating a second identification (32),
• transmitting (S7) the second identification (32) to the second functional module (30),
• storing the transmitted second identification (32) in the second functional module (30),
• removing (S8) the second functional module (30) from the slot (12) of the door drive (10),
• reinserting (S9) the first functional module (20) into the slot (12) of the door drive (10), and
• transmitting (S10) the transmitted second information (BS) to the first functional module (20),
• storing the transmitted second information (BS) in the first functional module (20), and
• in the door drive (10), enabling the detected at least one other function to be enabled.

6. The method according to claim 5, wherein the step of enabling the at least one other function to be enabled is exclusively performed, if
• the door drive (10) has previously checked, whether or not storing the transmitted second identification (32) in the second functional module (30) and/or the second information (BS) in the first functional module (20) was successful, and
• the test result is identified by a successful storing of the transmitted second identification (32) in the second functional module (30) and/or of the second information (BS) in the first functional module (20).

7. The method according to claim 5 or 6, furthermore including the step of storing the second information (BS) in the door drive (10).

8. The method according to claim 6 and 7, wherein the step of storing the generated second information (BS) in the door drive (10) is exclusively performed, if the test result is identified by a successful storing of the transmitted second identification (32) in the second functional module (30) and/or the of second information (BS) in the first functional module (20).

9. The method according to any of the preceding claims, wherein the first information (DCW) consists of a first function code (21) and/or the second information (BS) consists of a second function code (31).

10. The method according to claim 9, wherein the first identification (22) is formed by means of the first function code (21) and/or the second identification (32) is formed by means of the second function code (31) or by means of a flag bit.

11. The method according to claim 9 or 10, wherein the transmitted second information (BS) is formed by means of the second function code (31).

12. The method according to any of the preceding claims, furthermore including an exchange scenario, comprising the steps of:
• removing the first functional module (20) from the slot (12) of the door drive (10),
• exchanging a basic module (11) of the door drive (10) for a second basic module (11),
• inserting the first functional module (20) into the slot (12) of the door drive (10), and
• in the second basic module (11):
- accepting the first identification (22) and/or the information (DCW, BS) on the function(s) to be enabled, and
- in the door drive (10), enabling the function(s) to be enabled.

13. The method according to any of the preceding claims, furthermore including, directly following the removal of a functional module (20, 30) from the slot (12) of the door drive (10):
• checking for how long no functional module (20, 30) was inserted in the slot (12) of the door drive (10), and
• when exceeding a predetermined period of time, de-activating all enabled functions in the door drive (10).

14. The method according to any of the preceding claims, furthermore including a failure scenario, comprising the steps of:
• removing the inserted functional module (20, 30) from the slot (12) of the door drive (10),
• inserting a test module into the slot (12) of the door drive (10), and
• activating a test routine in the door drive (10) and/or in the test module.

15. The method according to any of the preceding claims, wherein the functional modules (20, 30) furthermore include a visual indication (24, 25'; 34, 34') for indicating predetermined conditions.

16. A door drive (10) having a basic module (11), a processor unit (13), and a slot (12), wherein
• a plurality of functions of the door drive (10) are performed by means of the basic module (11), and
• the door drive (10) is adapted to perform a method according to any of the preceding claims, in that the steps to be performed by the door drive (10) are performed by the basic module (11) or the processor unit (13).

17. The door drive (10) according to claim 16, wherein the basic module (11) and/or the first functional module (20) and/or the second functional module (30) include a communication port (14).

## Revendications

1. Procédé pour l'opération d'un entraînement de porte (10), comprenant un scénario d'activation, comportant les étapes suivantes :
• insérer (S1) un premier module de fonctionnement (20) dans un emplacement (12) de l'entraînement de porte (10), lequel module comprend une première information (DCW) sur au moins une fonction à activer,
• communiquer (S2) la première information (DCW) à l'entraînement de porte (10),
• dans l'entraînement de porte (10), détecter ladite au moins une fonction à activer sur la base de la première information (DCW) communiquée,
• dans l'entraînement de porte (10), générer une première identification unique (22),
• communiquer (S3) la première identification (22) générée au premier module de fonctionnement (20),
• mémoriser dans le premier module de fonctionnement (20) la première identification (22) communiquée, et
• dans l'entraînement de porte (10), activer l'au moins une première fonction à activer (DCW) détectée.

2. Procédé selon la revendication 1, dans lequel l'étape d'activation de l'au moins une fonction (DCW) à activer s'effectue uniquement, si
• l'entraînement de porte (10) a vérifié au préalable, si la mémorisation dans le premier module de fonctionnement (20) de la première identification (22) communiquée a réussi, et
• le résultat de la vérification marque une mémorisation réussie dans le premier module de fonctionnement (20) de la première identification (22) communiquée.

3. Procédé selon la revendication 1 ou 2, comprenant par ailleurs l'étape de mémorisation dans l'entraînement de porte (10) de la première identification (22) générée.

4. Procédé selon la revendication 2 et 3, dans lequel l'étape de mémorisation dans l'entraînement de porte (10) de la première identification (22) générée s'effectue uniquement, si le résultat de la vérification marque dans le premier module de fonctionnement (20) une mémorisation réussie de la première identification (22) communiquée.

5. Procédé selon l'une des revendications précédentes, comprenant par ailleurs un scénario d'extension, comportant les étapes suivantes :
• retirer (S4) le premier module de fonctionnement (20) de l'emplacement (12) de l'entraînement de porte (10),
• insérer (S5) dans l'emplacement (12) de l'entraînement de porte (10) un deuxième module de fonctionnement (30) comprenant une deuxième information (BS) sur au moins une autre fonction à activer,
• communiquer (S6) la deuxième information (BS) à l'entraînement de porte (10),
• dans l'entraînement de porte (10), détecter l'au moins une autre fonction à activer sur la base de la deuxième information (BS) communiquée,
• dans l'entraînement de porte (10), générer une deuxième identification (32),
• communiquer (S7) la deuxième identification (32) au deuxième module de fonctionnement (30),
• mémoriser dans le deuxième module de fonctionnement (30) la deuxième identification (32) communiquée,
• retirer (S8) le deuxième module de fonctionnement (30) de l'emplacement (12) de l'entraînement de porte (10),
• insérer de nouveau (S9) le premier module de fonctionnement (20) dans l'emplacement de l'entraînement de porte (10), et
• communiquer (S10) la deuxième information (BS) communiquée au premier module de fonctionnement (20),
• mémoriser dans le premier module de fonctionnement (20) la deuxième information (BS) communiquée, et
• dans l'entraînement de porte (10), activer l'au moins une autre première fonction à activer détectée.

6. Procédé selon la revendication 5, dans lequel l'étape d'activation de l'au moins une autre fonction à activer s'effectue uniquement, si
• l'entraînement de porte (10) a vérifié au préalable, si la mémorisation dans le deuxième module de fonctionnement (30) de la deuxième identification (32) communiquée et/ou dans le premier module de fonctionnement (20) de la deuxième information (BS) a réussi, et
• le résultat de la vérification marque une mémorisation réussie dans le deuxième module de fonctionnement (30) de la deuxième identification (32) communiquée et/ou dans le premier module de fonctionnement (20) de la deuxième information (BS).

7. Procédé selon la revendication 5 ou 6, comprenant par ailleurs l'étape de mémorisation dans l'entraînement de porte (10) de la deuxième information (BS).

8. Procédé selon la revendication 6 et 7, dans lequel l'étape de mémorisation dans l'entraînement de porte (10) de la deuxième information (BS) générée s'effectue uniquement, si le résultat de la vérification marque une mémorisation réussie dans le deuxième module de fonctionnement (30) de la deuxième identification (32) communiquée et/ou dans le premier module de fonctionnement (20) de la deuxième information (BS).

9. Procédé selon l'une des revendications précédentes, dans lequel la première information (DCW) consiste en un premier code de fonctionnement (21) et/ou la deuxième information (BS) en un deuxième code de fonctionnement (31).

10. Procédé selon la revendication 9, dans lequel la première identification (22) est formée au moyen du premier code de fonctionnement (21) et/ou la deuxième identification (32) est formée au moyen du deuxième code de fonctionnement (31) ou d'un bit drapeau (Bit-Flag).

11. Procédé selon la revendication 9 ou 10, dans lequel la deuxième information (BS) communiquée est formée au moyen du deuxième code de fonctionnement (31).

12. Procédé selon l'une des revendications précédentes, comprenant par ailleurs un scénario d'échange, comportant les étapes suivantes :
• retirer le premier module de fonctionnement (20) de l'emplacement (12) dans l'entraînement de porte (10),
• échanger un module de base (11) de l'entraînement de porte (10) pour un deuxième module de base (11),
• insérer le premier module de fonctionnement (20) dans l'emplacement de l'entraînement de porte (10), et
• dans le deuxième module de base (11) :
- accepter la première identification (22) et/ou l'information (DCW, BS) sur la fonction/les fonctions à activer, et
- dans l'entraînement de porte (10), activer la fonction/les fonctions à activer.

13. Procédé selon l'une des revendications précédentes, comprenant par ailleurs, directement suivant l'enlèvement d'un module de fonctionnement (20, 30) de l'emplacement (12) dans l'entraînement de porte (10) :
• vérifier pour combien de temps aucun module de fonctionnement (20, 30) n'a pas été inséré dans l'emplacement (12) dans l'entraînement de porte (10), et
• lorsqu'une période prédéterminée a été dépassée, désactiver dans l'entraînement de porte (10) toutes les fonctions activées.

14. Procédé selon l'une des revendications précédentes, comprenant par ailleurs un scénario de défaillance, comportant les étapes suivantes :
• retirer le module de fonctionnement (20, 30) inséré de l'emplacement (12) dans l'entraînement de porte (10),
• insérer un module de test dans l'emplacement (12) dans l'entraînement de porte (10), et
• activer une routine de test dans l'entraînement de porte (10) et/ou dans le module de test.

15. Procédé selon l'une des revendications précédentes, dans lequel les modules de fonctionnement (20, 30) comprennent par ailleurs une indication visuelle (25, 25' ; 34, 34') pour indiquer des conditions prédéterminées.

16. Entraînement de porte (10) avec un module de base (11), une unité ordinateur (13) et un emplacement (12), dans lequel
• une multitude de fonctions de l'entraînement de porte (10) est exécutée au moyen du module de base (11), et
• l'entraînement de porte (10) est aménagé pour exécuter un procédé selon l'une des revendications mentionnées ci-avant en ce que les étapes à exécuter par l'entraînement de porte (10) sont exécutées par le module de base (11) ou par l'unité d'ordinateur (13).

17. Entraînement de porte (10) selon la revendication 16, dans lequel le module de base (11) et/ou le premier module de fonctionnement (20) et/ou le deuxième module de fonctionnement (30) comprennent/comprend un port de communication (14).
